# EUROPEAN PATENT SPECIFICATION

(11) **EP 2 314 407 B1**
(45) Date of publication and mention of the grant of the patent: **12.11.2014**
(21) Application number: 10176438.9
(22) Date of filing: 13.09.2010
(51) Int. Cl.: B23K 9/20

(54) **Method of and apparatus for joining a fastening element to a component with impinging of the fastening element on the workpiece with low momentum**
Verfahren und Vorrichtung zum Verbinden eines Verbindelements auf einem Werkstück mit Ankunft des Verbindelements auf dem Werkstück mit niedrigem Momentum
Procédé et appareil d'assemblage d'un élément de fixation sur une pièce avec arrivée de l'élément de fixation sur la pièce avec un moment faible

(30) Priority: 23.10.2009 DE 102009051571
(43) Date of publication of application: 27.04.2011
(73) Proprietor: Newfrey LLC, Newark, Delaware 19711 (US)
(72) Inventor: Napierala, Stefan, 35394 Giessen (DE); Gottwals, Haymo, 35394 Giessen (DE); Gerlach, Lothar, 35394 Giessen (DE)
(74) Representative: Steil, Christian

(56) References cited:
- DE-A1- 10 007 838
- DE-A1- 19 539 791
- DE-C1- 4 427 370
- DE-U1-202006 016 484

## Description

The invention relates to a method of joining a fastening element to a component and a joining apparatus for carrying out such a method, according to the preamble of claims 1 and 12 (see, for example, DE 195 39 791 A).

Various methods for joining a fastening element, such as a stud, to a component, such as a metal sheet, are known in the prior art. For example, it is known to glue or thermoplastically weld fastening elements to components. Furthermore, stud welding, as it is known, is an established process for welding metallic fastening elements to metallic components. In stud welding, in general, an arc is generated between the fastening element and the component. By means of the arc, a welding zone of the component and a welding surface of the fastening element are fused. Subsequently, the fastening element is lowered onto the component, so that the melts are intermixed. When a short circuit thus occurs, the welding current is switched off. The overall melt solidifies, so that the fastening element is connected to the component in a materially integral manner.

This type of stud welding is used to a great extent, for example, in the automobile industry, fastening elements in the form of welding studs being welded to a body panel. The welding studs then serve as an anchor for the fastening of building-on elements or for snapping on plastic clips, to which, in turn, other components can be secured, such as electrical leads, brake hoses, etc.

In the automobile industry sector, nowadays the aim is for the vehicle bodies to have as low a weight as possible. This results in the use of especially lightweight materials, such as aluminium sheets. Furthermore, this results in the use of especially thin sheets.

It is precisely here where the way in which the fastening element is dipped into the welding zone assumes particular importance. It is in this case known, for example, to dip the fastening element into the melt zone by means of position control such that the fastening element does not touch a firm bottom or base in the component. This, particularly with regard to thin sheets, may cause the overall melt to become porous, so that only low strength can be achieved.

On the other hand, it is in this case known to dip the fastening element into the welding zone by means of force control. In this case, the fastening element impacts, hard, upon the bottom of the welding zone of the component. This may lead to undesirable crack formations on the rear side of the component. Such crack formations, too, may lead to a weakening of the welding.

Document DE 195 39 791 A1 discloses a method of joining a fastening element to a component, with the steps of insertion of the fastening element into a holding device, positioning the holding device above the component and lowering the fastening element onto the component until the fastening element impinges onto the component, wherein the lowering takes place in such a way that the fastening element impinges onto the component with low momentum. To this purpose, a dampening spring is provided, which decelerates the movement of the holding device at a point briefly before reaching the position, where the fastening element impinges onto the component.

Similar joining methods and apparatuses are known from documents DE 44 27 370 C1 and DE 20 2006 016 484 U1. Document DE 44 27 370 C1 discloses in this respect to arrange a compression spring such that the compression spring is compressed by a counterforce which is provided by the component after the fastening element has impinged onto the component.

Against the above background, an object of the invention is to specify an improved method for joining a fastening element to a component and also a joining apparatus suitable for this purpose.

The above object is achieved, on the one hand, by means of a method of joining a fastening element to a component according to claim 1, with the steps of inserting the fastening element into a holding device, of positioning the holding device above the component and of lowering the fastening element onto the component, until the fastening element impinges onto the component, lowering taking place in such a way that the fastening element impinges onto the component with low momentum.

Furthermore, the above object is achieved by means of a joining apparatus for joining a fastening element to a component according to claim 12 with a holding device for holding a fastening element, with a linear actuator for the linear movement of the holding device and with a control device.

The method according to the invention comprises the step of lowering the fastening element onto the component such that the fastening element impinges onto the component. The impingement of the fastening element onto the component in this case means, in particular, that, in what is known as stud welding, the fastening element impinges on the bottom of the welding zone. The situation can thereby be avoided where a porous melt of low strength is obtained. On the other hand, the method according to the invention provides for the lowering to be carried out in such a way that the fastening element impinges onto the component with low momentum. The momentum or "impetus" with which this impingement takes place is a variable which depends on the speed of impingement and on the mass which impinges onto the component. By lowering taking place in such a way that the fastening element impinges with low momentum, in particular with a lower momentum than it had before being dipped into the welding zone, bulging and crack formations on the rear side of the component are avoided. The connection strength, in particular the tensile strength of the joining connection achieved, can thereby be increased.

The joining method according to the invention may in this case be used, in particular, for stud welding. It is also possible, however, to apply the method to other joining connections, for example to thermoplastic welding methods, gluing methods, etc. Insofar as a fastening element is designated as a stud in the present context, this means, in particular, a rotationally symmetrical fastening component which, for example, may have a shank and a flange portion. Alternatively to this, a stud is to be understood as meaning any type of sheet-like element which is joined, "on edge", that is to say with one end face, to the component. The materials used for the fastening element and for the component may be, in particular, metals, in particular light metals, such as aluminium or alloys thereof. Alternatively to this, the materials used may also be plastics, composite materials, etc.

It is especially advantageous that the effective mass impinging onto the component during the lowering of the fastening element is reduced. The "effective" mass is in this case not only the mass of the fastening element itself, but, for example, also the mass of the holding device on which the fastening element is held.

According to the present invention, at least before the impingement of the fastening element onto the component, relative movability between the fastening element and the holding device is made possible, so that the fastening element impinges onto the component with reduced momentum.

What can be achieved by this "decoupling" of the masses of the fastening element, on the one hand, and of the holding device (and, if appropriate, further structural elements connected to the holding device), on the other hand, is that the "effective" mass which impinges onto the component is markedly reduced. Ideally, this may be only the mass of the fastening element itself. What must also be taken into account here, in any case, are frictional forces which occur during the relative movement between the holding device and the fastening element.

By the "effective" mass being reduced, the momentum with which the fastening element impinges onto the component can be markedly reduced. What can be achieved, conversely, is that the fastening element impinges onto the component at a relatively high speed (in particular, > 200 mm/s), without the risk of crack formations on the rear side of the component being appreciably increased. In stud welding, it is important that, after the welding current has been switched off, the fastening element is moved as quickly as possible through the melt of the welding zone onto the firm bottom of the component. This is true especially when metals, such as aluminium, are used, specifically, in particular, because of the high solidification rate of the melt in this type of material, this usually being due to high thermal conductivity.

In this case, furthermore, it is advantageous if the holding device (and, if appropriate, structural elements connected to it) is braked after the impingement of the fastening element onto the component.

In other words, after the impingement of the fastening element onto the component, the mass of the holding device, moving in relation to the fastening element on account of the inertia forces, is braked. This avoids the situation where the holding device impinges onto the component or onto a flange of the fastening element.

As already mentioned above, it is especially advantageous if the joining method is a stud-welding method, in which at least one welding zone of the component is fused, and preferably also an opposite welding surface of the fastening element, the fastening element being lowered onto the component until the fastening element impinges onto a bottom or base of the fused welding zone.

In this case, it is especially advantageous if the holding device is lowered, position-controlled by means of a linear actuator, to a desired position ("penetration") which, independently of the depth of the fused welding zone and independently of a burn-off on the fastening element, ensures an impingement of a non-fused portion of the fastening element onto a non-fused portion of the component.

What is thereby achieved is that, in spite of position control being carried out, an impingement of the fastening element onto the component is ensured, so that a porous melt is avoided. As a result, welding, as in the case of force control, is achieved.

It is in this case especially advantageous if the holding device is driven into an end position in which the fastening element would bend the component if no relative movability were set up between the holding device and the fastening element.

It is advantageous, furthermore, if the fastening element penetrates the welding zone essentially at a constant speed.

This constant speed may in this case be relatively high, so that the fastening element can impinge onto the component before the melt solidifies after the welding current has been switched off.

Furthermore, it is advantageous, overall, if the fastening element is inserted into the holding device from the rear by means of a loading pin.

In this type of joining method, a loading-pin actuator, such as, for example, a pneumatic cylinder, generally remains active after the insertion of the fastening element into the holding device, so that the loading pin bears against the fastening element. A relatively rigid connection between the loading pin and other masses indirectly connected to it is achieved, for example in the case of a pneumatic loading-pin actuator, by means of a relatively high air pressure (of, for example, > 2 bar, in particular > 3 bar, typically a system pressure of, for example, about 6 bar), with which the loading pin is acted upon.

In the prior art, this activation of the loading-pin actuator is maintained during the entire joining process, in order thereby to fix the relative position between the holding device and the fastening element. It thereby becomes possible to equate the position of the fastening element with the position of the holding device.

Within the scope of the present invention, however, it is especially advantageous if a relative movability between the fastening element and the holding device is set up in that such a loading-pin actuator is partially or completely deactivated.

In the case of a pneumatic loading-pin actuator, it is possible, for example, to reduce the air pressure in the loading-pin actuator partially (for example, to < 3 bar) or completely. As a result, a decoupling of the masses between the fastening element and the loading pin bearing on it, on the one hand, and the other masses of a movable slide on a joining head, on the other hand, is achieved. These other masses may be, for example, the holding device, but also the loading-pin actuator, connecting lines for current and air and parts of a linear actuator, by means of which such a slide can be moved on a joining head (for example, an armature of an electric linear motor).

In this embodiment, an "effective" mass which impinges onto the component is essentially the sum of the mass of the fastening element and that of the loading pin. The masses decoupled from this, for example those of the holding device, etc., act on the fastening element at most via frictional force by means of which the latter is held relatively movably on the holding device.

Furthermore, the remaining masses of such a slide may also act on the loading pin and consequently on the fastening element via compressed air, not reduced to zero, in a pneumatic loading-pin actuator. The dipping energy can thereby be damped, without in this case any loss of dipping speed.

According to a further embodiment preferred in this case, the loading-pin actuator is reactivated again partially or completely after the welded connection has been made, so that that relative position which was present before the impingement of the fastening element onto the component is set up again between the fastening element and the holding device.

As a result, a relative displacement between the fastening element and the holding device is cancelled again, so that the relative position between the fastening element and holding device corresponds again to that position in which, for example, zero-point determination was carried out. Consequently, after that relative position has been restored, it is possible to measure the penetration implemented in the welded connection. This is a parameter important for the quality of the welded connection and is preferably monitored in every welding operation.

The restoration of the relative position may take place in that the loading-pin actuator is supplied with the full energy, for example the maximum system pressure, again. If, however, the deactivation of the loading-pin actuator for setting up the relative movability between the fastening element and holding device has taken place only partially, for example to a pressure value of < 3 bar, but > 0 bar, then the force thereby applied by the loading-pin actuator may be sufficient to restore the original relative position.

Although it is preferable to reduce the momentum with which the fastening element impinges onto the component by reducing the "effective" mass, it is also possible, alternatively or additionally, to lower the momentum by reducing the speed of the fastening element.

This preferably takes place in that the fastening element is braked after being dipped into the welding zone.

In other words, the fastening element is still dipped into the welding zone at relatively high speed, but, during the penetration of the welding zone, is braked shortly before impingement to such an extent that the momentum of the fastening element is reduced.

This may take place, for example, in that a linear actuator for lowering the holding device is activated so that the holding device is braked.

Alternatively to this, it is possible, for braking, to build up a counterforce, for example by means of a spring arrangement or the like.

In the embodiments in which the fastening element is braked after being dipped into the welding zone, it is not absolutely necessary to set up relative movability between the fastening element and the holding device.

In general, by means of the present invention, a rapid and at least largely jolt-free dipping of the fastening element into the melting zone of the component can be achieved. The method according to the invention is preferably to be applied to thin metal sheets consisting, in particular, of aluminium, but also of steel.

In the embodiments with a loading pin, it may be preferable to provide a spring arrangement which is integrated into the loading-pin actuator. The spring arrangement may in this case be arranged, for example, such that it counteracts a force applied by the loading-pin actuator in order to set up the loading position (that is to say, for pressing the fastening element through). Such an arrangement may be provided, for example, for the purpose of implementing a softer pressing of the fastening element through the holding device. Within the scope of the present invention, such a spring arrangement may also serve for damping a relative movement between the loading pin and the loading-pin actuator which occurs when the fastening element impinges onto the component. In this case, it may be necessary for the spring device to act as a compression spring and as a tension spring.

In general, in the method according to the invention, it is also possible, as mentioned above, to measure a penetration or a burn-off on the fastening element. In the embodiment with the loading pin, it is in this case possible to act upon the latter again with compressed air after the welded connection has been made. As a result, a rigid state, that is to say force coupling between the fastening element and the other structural elements of a slide movable on a joining head, is set up again, as before the commencement of welding. It would thereby also be possible to check whether the welding operation has been terminated in a force mode or position mode. In the case of the latter, a displacement measurement system ought not to be capable of measuring any difference after the loading-pin actuator is activated again. In this case, a warning message indicating that too low a penetration has been programmed could be output.

The linear actuator used may be an electric linear motor. It is also possible, however, to use as a linear actuator a spring which is prestressed and which then causes the fastening element to impinge onto the component in a force mode.

In particular, a pneumatic actuator can be used as a loading-pin actuator. However, a loading-pin actuator may also be designed to be hydraulic or electrical, for example by means of an electric motor.

The holding device is preferably a collet chuck which can be widened radially. In the case of studs with a shank portion and with a flange portion, the collet chuck is preferably designed to press the flange portion through the collet chuck until the collet chuck bears against the shank portion. In this case, it is preferable, in turn, if a predetermined clearance is set up between the end of the collet chuck and a top side of the flange portion. The predetermined clearance can then be used for relative movability between the holding device and the fastening element and for braking the holding device and parts connected to it. On account of the holding device being braked, the situation can thereby be avoided where the holding device impacts onto the top side of the flange portion.

The joining method according to the invention is preferably capable of being carried out when there is access to the component on only one side, that is to say without a counterbearing on the component.

It will be appreciated that the features mentioned above and those yet to be explained below can be used not only in the combination specified in each case, but also in other combinations or all alone, without departing from the scope of the present invention.

Exemplary embodiments of the invention are illustrated in the drawing and are explained in more detail in the following description. In the drawing:
- Fig. 1: shows a diagrammatic illustration of one embodiment of a joining method according to the invention;
- Fig. 2: shows the flow of a further embodiment of a joining method according to the invention;
- Fig. 3: shows a displacement/time graph to explain the method shown in Fig. 2;
- Fig. 4: shows a diagrammatic illustration of a joining apparatus for carrying out the joining method according to the invention;
- Fig. 5: shows a view, corresponding to Fig. 4, of a detail of an alternative embodi- ment of a loading-pin actuator;
- Fig. 6: shows a graph of current and voltage against time during a stud-welding operation according to the invention;
- Fig. 7: shows a graph of the displacement of the holding device against time in the stud-welding operation of Fig. 6; and
- Fig. 8: shows a bar graph to illustrate the achievable tensile strengths of welded connections which have been carried out by means of the method according to the invention, as compared with a welded connection of the prior art.

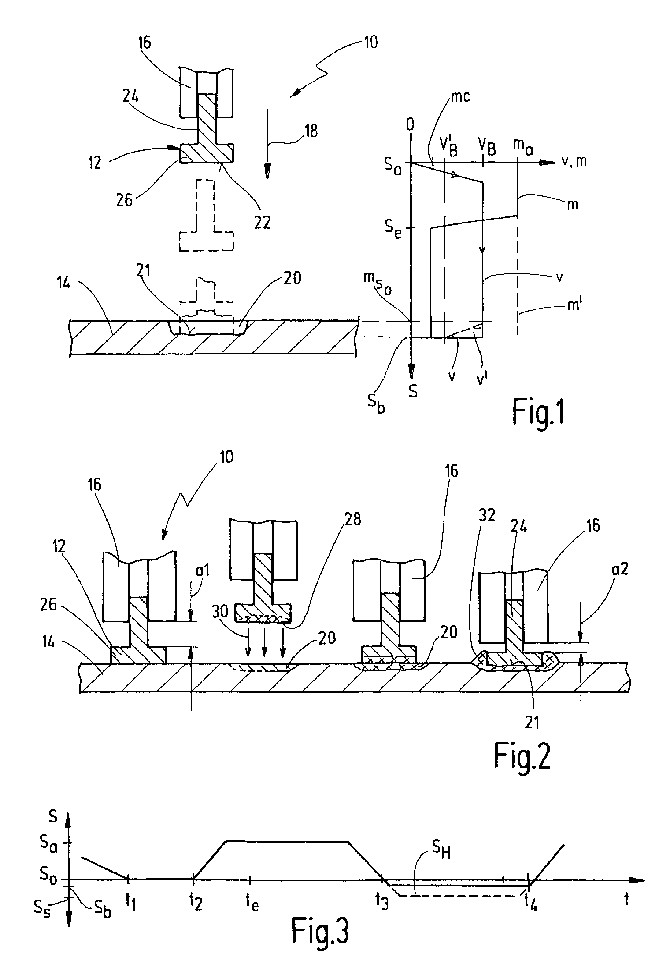

In Fig. 1, a joining apparatus is illustrated in diagrammatic form and is designated in general by 10. The joining apparatus 10 serves for welding a fastening element 12, such as a rotationally symmetrical welding stud, to a component 14, such as a metal sheet. The fastening element 12 and the component 14 may be produced from aluminium.

The joining apparatus 10 contains a holding device 16 which is designed to hold the fastening element 12. The joining apparatus 10 contains means for moving the holding device 16 towards the component 14 along a joining direction 18.

Preferably, the joining apparatus 10 is designed as a stud-welding apparatus, in which an arc is generated between the fastening element 12 and the component 14, by means of which arc a welding surface 22, facing the component 14, of the fastening element 12 and an opposite welding zone 20 of the component 14 are fused. In this case, in the region of the welding zone 20, a melt, the bottom or base of which is shown at 21 in Fig. 1, is obtained.

The fastening element 12 has a shank 24, on which the holding device 16 engages. Furthermore, the fastening element 12 has a flange 26 with a larger diameter than the shank 24. The welding surface 22 is provided on the side facing away from the shank 24.

After the arc has been generated and melts have been formed on the welding zone 20 and on the welding surface 22, the holding device 16 is lowered onto the component 14, in such a way that the welding surface 22 impinges onto the bottom 21 of the welding zone 20. When the welding zone 20 is reached, the arc is switched off, so that the overall melt then obtained cools and solidifies, in order to make a materially integral connection between the fastening element 12 and the component 14.

It is in this case important that the fastening element 12 is led through the welding zone 20 as far as its bottom 21 at as high a speed as possible. Since the welding surface 22 touches the bottom 21, a kind of "fixing" of the fastening element 12 against the component 14 can be achieved during the time span while the overall melt is cooling. This avoids the melt becoming porous.

If the fastening element 12 is caused to impinge onto the bottom 21 of the welding zone 20 at a high speed, crack formations on the rear side of the component 14 may occur in the prior art.

In the present case, this is prevented in that the fastening element 12 impinges, according to the present invention, onto the bottom 21 with a reduced momentum. The momentum is calculated by the product of the speed and the effective mass which are plotted in Fig. 1 on the right-hand side in a graph as v and m against the displacement s. The displacement s of the fastening element 12 in this case commences, in the position shown diagrammatically in Fig. 1 and spaced apart from the component 14, at a value Sₐ. At so, the fastening element 12 impinges onto the surface of the welding zone 20. At this time point, the arc is typically extinguished, and the welding current is switched off, so that the solidification of the melt commences. At S_{b}, the end position of the fastening element 12, in which the fastening element 12 lies on the bottom 21, is shown.

The graph shown on the right-hand side in Fig. 1 shows, then, that the fastening element 12 is first accelerated to a speed v_{B} and is lowered at this relatively high speed as far as the bottom 21. Furthermore, it can be seen in Fig. 1 that the effective mass with which the fastening element 12 impinges onto the bottom 21 has a value of mₐ at the commencement of the lowering operation. At least before impingement on the bottom 21, this effective mass is reduced from the initial value mₐ to a reduced value mₑ. This is illustrated in Fig. 1 at a displacement value sₑ. The reduction of the mass to the value mₑ may, however, also already have taken place previously, for example even before the lowering operation.

Consequently, the fastening element 12 impinges onto the bottom 21 with a reduced momentum, so that crack formations on the rear side of the component 14 are avoided or reduced.

The reduction in mass may take place, for example, by means of a relative displacability or decoupling between the fastening element 12 and the holding device 16. This is because the effective mass m consists not only of the mass of the fastening element 12 itself, but also of the elements which are rigidly connected to it.

Alternatively to this, it is also possible, instead of reducing the mass, to reduce the speed in order to reduce the momentum, aspect not covered by the present invention. This is shown in Fig. 1, in the graph shown on the right, by the profiles m', v' of the mass and of the speed. In this case, the mass m' remains at the initial value mₐ, that is to say is not varied. However, the speed v' is reduced from the relatively high value v_{B} after the fastening element 12 is dipped into the melt 20, that is to say after the value s₀ is reached. The reduction in the speed v' takes place to a value v_{B}'. What can be achieved as a result of this, too, is that the momentum is reduced.

It is in this case important that the reduction in the speed v' takes place as late as possible, preferably, as illustrated, after the displacement value s₀ is reached, but before the final value s_{b} is reached. The reduction in the speed v' may be achieved, for example, in that a counterforce is built up, for example by means of a damping member which is connected to the holding device 16. Alternatively to this, the reduction in the speed v' may also be achieved in that a linear actuator for moving the holding device 16 is braked in a directed manner.

The two measures for reducing the speed and for reducing the mass may also be combined with one another.

The joining method illustrated in Fig. 1 is not only applicable to the stud welding described above. The joining method may also be applicable to gluing methods or to thermoplastic welding methods.

Fig. 2 and 3 show various phases of a stud-welding operation, momentum reduction being achieved by means of a reduction in the effective mass.

Fig. 2 shows in this case, from left to right, the various phases of the stud-welding operation. Fig. 3 shows the assigned displacement/time graph. In the stud-welding method, the fastening element 12 is first held fixedly or immovably on the holding device 16, an initial clearance a1 being set up between an underside of the holding device 16 and a top side of the flange 26. In this state, the holding device 16 is lowered in the direction of the component 14, until the fastening element 12 touches the top side of the component 14, as illustrated on the far left in Fig. 2 according to a time point t₁. The position corresponds to a zero-point position s₀. A pilot current is subsequently switched on, and at the time point t₂ the holding device 16 is raised by a predetermined amount to the position sₐ. An arc 30 occurs. After the time point t₂, the welding current is switched on, so that the arc 30, on the one hand, fuses the component 14 in the region of the welding zone 20. On the other hand, a weld region 28 is generated on the underside of the fastening element 12 in the region of the welding surface 22.

Subsequently or even beforehand and according to the present invention, at a time point tₑ, the fastening element 12 is decoupled from the holding device 16, in such a way that a relative movability in a direction parallel to the joining direction 18 is set up between the holding device 16 and the fastening element 12. The time point tₑ preferably comes after the time point t₁, so that at the time point t₁ the zero-point position s₀ can be determined by means of the rigid connection between the holding device 16 and fastening element 12.

Subsequently, the holding device 16 is lowered onto the component 14, until, at a time point t₃, the underside of the fastening element 12 reaches the zero-point position so. The holding device 16 is then lowered at an unchanged speed towards the component 14, so that the fastening element 12 quickly penetrates the welding zone 20, and finally the fastening element 12 impinges onto the bottom 21 of the welding zone 20, that is to say the fastening element 12 has reached the position s_{b}. By relative movability being set up, the holding device 16 is pushed over the shank portion 24. Consequently, the mass of the holding device 16 is not incorporated into the effective mass determining the momentum with which the fastening element 12 impinges onto the bottom 21 of the welding zone 20.

This further movement of the holding device 16 in relation to the fastening element 12 is indicated diagrammatically at s_{H} in Fig. 3. After the impingement of the fastening element 12 on the bottom 21 of the welding zone 20, the holding device 16 is preferably braked, in order to avoid the situation where the underside of the holding device 16 impinges onto the top side of the flange portion 26. Braking takes place such that a final clearance a2 between the underside of the holding device 16 and the top side of the flange portion 26 is reached, where a2 < a1. By the flange portion 26 being introduced into the welding zone 20, part of the melt is pressed radially outwards, so that a marginal bead 32 is formed. After the solidification of the overall melt, the holding device 16 is drawn off from the shank 24 opposite to the joining direction 18, as shown from t₄ in Fig. 3.

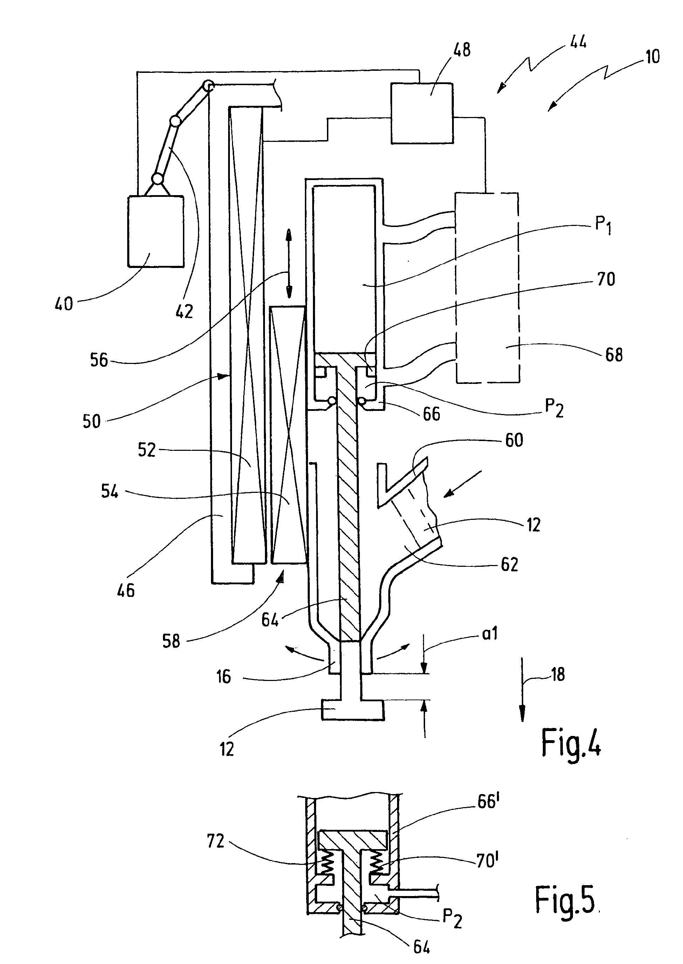

Fig. 4 illustrates diagrammatically a joining apparatus 10 by means of which the methods described above can be carried out.

The joining apparatus 10 contains, for example, a robot 40 with at least one arm 42, to the end of which a joining head 44 is secured. The joining head 44 has a housing 46 on which a control device 48 is secured.

However, the joining head 44 may also be designed as a hand-operated joining head, that is to say not be connected to a robot arm, but, instead, be actuable by hand. Furthermore, a linear motor 50 is secured to the housing 46 and has a stator connected rigidly to the housing 46 and an armature 54. The armature 54 is movable parallel to the joining direction 18, as shown at 56 in Fig. 4. The armature 54 forms part of a slide 58 which is movable parallel to the joining direction 18 by means of the linear motor 50. A fastening-element guide 60 is secured to the slide 58 and has a supply duct 62. Fastening elements 12 can be supplied, with the flange 26 in front, via the supply duct 62, specifically such that they come to stand above a holding device 16. Furthermore, a loading pin 64 displaceable parallel to the joining direction 18 is provided on the slide 58. The loading pin 64 is movable in relation to the slide 58 by means of a loading-pin actuator 66. In the embodiment illustrated, the loading-pin actuator 66 is designed as a pneumatic loading-pin cylinder 66. The loading-pin cylinder 66 may be designed as a single-acting cylinder, but, in the present case, is designed as a double-acting cylinder. In a first pressure space, a pressure P₁ prevails, by means of which the loading pin can be shifted in order to press through the fastening element. In the other pressure space, a second pressure P₂ prevails. Consequently, a differential pressure P₁ -P₂ acts on the loading pin 64 in the joining direction 18. When a fastening element 12 is being supplied, the loading pin 64 is displaced upwards on the slide 58 (P₂ > P₁), so that the fastening element 12 can be supplied into a position above the holding device 16. Subsequently, the loading pin 64 is moved downwards (P₁ > P₂) by means of the loading-pin cylinder 66, so that the loading pin 64 bears on the top side of the shank portion 24. By means of the loading pin 64, the fastening element 12 is pressed through the holding device 16, until the initial clearance a1 is set up between the underside of the holding device 16 and the top side of the flange 26. In this position, a piston of the loading pin 64 bears against a stop 70 of the loading-pin cylinder 66.

The loading-pin cylinder 66 is connected to a pneumatic unit 68, indicated diagrammatically, which makes the pressures P₁ and P₂ available. The control device 48 is connected to the pneumatic unit 68 and to the linear motor 50 in order to activate these. Furthermore, the control device 48 may be connected to the robot 40 and to an overriding power supply unit.

At the time point t₁ illustrated in Fig. 3, the loading pin 64 is still acted upon by the loading-pin cylinder 66 such that a rigid coupling between the loading pin 64 and the fastening element 12 is set up. A zero-point determination can thereby be carried out. Typically, in this case, the pressure P₁ is set to a system pressure of, for example, 6 bar, and the pressure P₂ is set to zero.

At the time point tₑ in Fig. 3, the loading-pin cylinder 66 is activated by the pneumatic unit 68 such that the pressure P₁ in the cylinder 66 is reduced. The pressure P₁ is in this case preferably set to a value of < 50% of the system pressure (or, in another type of loading-pin actuator, to a value < 50% of the previous value). For example, the pressure P₁ may be reduced to a value < 3 bar. From then on, the holding device 16 is connected to the shank of the fastening element 12 by means of frictional engagement only.

As a result of this measure, the effective mass m, with which the fastening element 12 impinges on the bottom 21 of the welding zone 20, can be reduced. This is because, when the loading-pin cylinder 66 is acted upon with a high pressure and a rigid connection between the loading pin 64 and the fastening element 12 is set up, the effective mass not only consists of the fastening element 12 and of the loading pin 64, but additionally also of the masses of the fastening-element guide 60, of the holding device 16, of the loading-pin cylinder 66, of parts of the supply between the loading-pin cylinder 66 and pneumatic unit 68 and of parts of the linear motor 50 (mass of the armature 54).

Consequently, by the pressure P₁ in the loading-pin cylinder 66 being reduced, a relative movability between the fastening element 12 and the holding device 16 is set up, since the loading pin 64 can move, together with the fastening element 12, in relation to the slide 58. In general, it is possible to set the pressure P₁ for setting up the relative movability to 0 bar. Preferably, however, the pressure P₁ is set to a value > 0 and, for example < 50% of the system pressure. Alternatively, it is also possible, instead of reducing the pressure P₁, to increase the pressure P₂. In the case of a double-acting cylinder 66, as mentioned above, the difference between the pressures P₁ and P₂ is critical.

It will be appreciated that the loading-pin actuator 66 may also be designed as a hydraulic cylinder or as an electromechanical actuator, for example as a linear motor, as an electric motor or as an electromagnet. In these instances, a deactivation of the loading-pin actuator 66 may take place, for example, by a reduction or termination in the application of current, so that, once again, a reduction in the effective mass can take place.

The linear motor 50 is preferably used in order to drive the slide 58 in the joining direction 18. However, the linear motor 50 is also preferably used in order to brake the movement of the slide 58 in relation to the fastening element 12, so as to ensure a final clearance a2, as illustrated in Fig. 2.

Instead of an electric linear motor 50, however, a mechanically or fluidically acting actuator may also be used, such as, for example, a spring or a pneumatic or hydraulic actuator.

Fig. 5 shows a variant of a loading-pin cylinder 66'. This is, in general, constructed identically to the loading-pin cylinder 66 of Fig. 4. However, here, a spring arrangement 72 is provided between a piston of the loading-pin cylinder 64 and a stop 70'. This spring arrangement, on the one hand, can ensure a softer pressing of the fastening element 12 through the holding device 16. Insofar as the spring arrangement 72 also acts in the opposite direction, the spring arrangement 72 may also be used in order to damp the relative movement between the fastening element 12 and the holding device 16 which occurs when the fastening element 12 impinges onto the component 14.

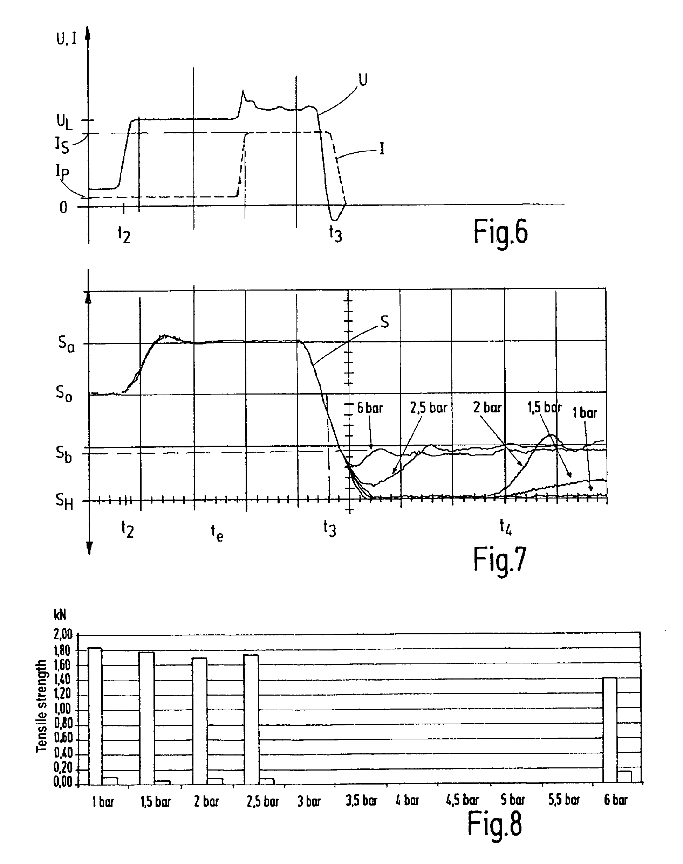

In Fig. 6 and 7, the welding current I and welding voltage U are plotted against time (Fig. 6) and the displacement s of the holding device 16 or of the slide 58 is plotted against time (Fig. 7). The times t₂ and t₃ entered in Fig. 6 and 7 correspond to the illustration in Fig. 3. Before the time point t₂, the holding device 16 is in a position such that the fastening element 12 bears against the component 14 (s = so, zero-point determination being capable of being carried out). In this case, a pilot current I_{P} is already switched on, and a certain voltage is applied which, however, may be very low (illustrated, enlarged, in Fig. 6). At the time point t₂, the holding device 16 is lifted off, so that the initial position sₐ is reached. The voltage U consequently rises, specifically to the arc voltage U_{L}. At a time point between t₂ and t₃, the current I is increased to the welding current Iₛ, so that an increased introduction of energy takes place, in order to fuse the welding surface 22 and the welding zone 20. Subsequently, the component is lowered again, the voltage U collapsing to 0 at the time point t₃ when the fastening element 12 touches the melt of the welding zone 20. On account of the burn-off on the welding surface 22, this time point is somewhat after the zero-point position so has been reached. Subsequently, the holding device 16 is lowered at a high speed which is unchanged, so that the fastening element 12 quickly penetrates the welding zone 20. The holding device 16 is in this case moved by position control to a preprogrammed position S_{H} which lies below the desired final position s_{b} of the fastening element 12 in relation to the component 14.

In Fig. 7, five different tests are in this case plotted, a test set-up according to Fig. 4 having been used. In this case, in a first test, the pressure P₁ (or a differential pressure P₁ - P₂) was kept at a high value (in the present case, a system pressure of 6 bar). It can be seen from the corresponding illustration that, on account of the quasi-rigid coupling between the loading pin 64 and the fastening element 12 and the impingement of a consequently high mass onto the component 14, a sharp oscillating movement of the fastening element 12 and of the component 14 is generated which fades away only at about the time point t₄. This welding operation consequently takes place by force control. As a result of the relatively high momentum during impact against the component 14, the latter is deflected or is deflected to below the desired penetration position s_{b}, so that cracks may occur on the rear side of the component 14.

In Fig. 7, further tests are plotted, in which the pressure P₁ has previously been reduced at a time point tₑ (or a reduced differential pressure P₁ -P₂ has been set). At a pressure of 2.5 bar, a relative movement between the holding device 16 and the fastening element 12 already occurs, but is cancelled again relatively quickly. In the tests at 2 bar, 1.5 bar and 1 bar, the holding device 16 moves as far as its preprogrammed penetration S_{H}, the holding device 16 being pushed over the shank of the fastening element 12 in such a way that the fastening element 12 can impinge onto the component 14 with reduced momentum. After the melt has solidified and the welded connection is completed, resetting takes place on account of the pressure P₁, the holding device 16 (or the slide 58) being returned on account of the pressure P₁ into a position in which the initial clearance a1 is set again between the lower end of the holding device 16 and the top side of the flange of the fastening element 12. This takes place relatively quickly from the time point t₄ in the case of a pressure of 2 bar and relatively slowly in the case of the pressures of 1.5 bar and 1 bar.

As soon as this initial clearance a1 is restored, the then existing position of the holding device 16 or of the slide 58 can be measured, in order to measure the amount of penetration s_{b} achieved with respect to the previously measured zero-point position s₀. In the case of relatively low pressures of P₁, the pressure P₁ may be increased again actively, for example to the time point t₄, so that this measurement can be carried out more quickly.

Fig. 8 illustrates the average tensile strengths achieved in the welding connections made in this way. It can be seen that the tensile strength lies at 1.4 kN at a pressure of 6 bar. In the case of the reduced pressures of 2.5 bar, 2 bar, 1.5 bar and 1 bar, the tensile strength in each case lies markedly above 1.60 kN and is consequently markedly improved. The small bars assigned in each case show the respective standard deviation σ, since the tensile strengths illustrated constitute average values of a series of welding tests.

## Claims

1. Method of joining a fastening element (12) to a component (14), with the steps of:
insertion of the fastening element (12) into a holding device (16), wherein the fastening element (12) is held fixedly or immovably;
positioning of the holding device (16) above the component (14); and **characterised by** the steps of:
lowering of the fastening element (12) onto the component (14), until the fastening element (12) impinges onto the component (14), lowering taking place in such a way that the fastening element (12) impinges onto the component (14) with low momentum, wherein at least before the impingement of the fastening element (12) onto the component (14), the fastening element (12) is decoupled from the holding device (16) in such a way that a relative movability in a direction parallel to the joining direction is set up between the fastening element (12) and the holding device (16), so that the fastening element (12) impinges onto the component (14) with reduced momentum.

2. Method according to Claim 1, in which the holding device (16) is braked after the impingement of the fastening element (12) onto the component (14).

3. Method according to one of Claims 1 to 2, in which the joining method is a stud-welding method in which at least one welding zone (20) of the component (14) is fused, the fastening element (12) being lowered onto the component (14) to an extent such that the fastening element (12) impinges onto a bottom (21) of the fused welding zone (20).

4. Method according to Claim 3, in which the holding device (16) is lowered, position-controlled, by means of a linear actuator (50) to a desired position (S_{H}) which, independently of the depth of the fused welding zone (20) and independently of a burn-off on the fastening element (12), ensures an impingement of a non-fused portion of the fastening element (12) onto a non-fused portion of the component (14).

5. Method according to Claim 3 or 4, in which the fastening element (12) penetrates the welding zone (20) essentially at a constant speed.

6. Method according to one of Claims 1 to 5, in which the fastening element (12) is inserted into the holding device (16) from the rear by means of a loading pin (64).

7. Method according to Claim 6, in which a relative movability between the fastening element (12) and holding device (16) is set up in that a loading-pin actuator (66) is deactivated partially or completely.

8. Method according to Claim 7, in which the loading-pin actuator (66) is reactivated again partially or completely after the welded connection has been made, so that, between the fastening element (12) and the holding device (16), that relative position is set up again which was present before the impingement of the fastening element (12) onto the component (14).

9. Method according to Claim 3, in which the fastening element (12) is braked after being dipped into the welding zone (20).

10. Method according to Claim 9, in which a linear actuator (50) for lowering the holding device (16) is activated such that the holding device (16) is braked.

11. Method according to Claim 9 or 10, in which a counterforce is built up for braking.

12. Joining apparatus (10) for joining a fastening element (12) to a component (14) with a holding device (16) for holding the fastening element (12), with a linear actuator (50) for the linear movement of the holding device (16) and **characterised by** a control device (48) adapted for carrying out a method including the steps of ;
holding fixedly or immovably the fastening element (12),
positioning of the holding device (16) above the component (14),
lowering of the fastening element (12) onto the component (14) until the fastening element (12) impinges onto the component (14), the lowering taking place in such a way that the fastening element (12) impings onto the component (13) with low momentum, with at least before the impingement of the fastening element (12) onto the component (14),
decoupling the fastening element (12) from the holding device (16) in such a way that a relative movability in a direction parallel to the joining direction is set up between the holding device (16) and the fastening element (12), so that the fastening element (12) impinges onto the component (14) with reduced momentum.

## Patentansprüche

1. Verfahren des Fügens eines Befestigungselementes (12) auf ein Bauteil (14), mit den Schritten:
Einsetzen des Befestigungselementes (12) in eine Halteeinrichtung (16), wobei das Befestigungselement (12) fest oder unbeweglich gehalten wird;
Positionieren der Halteeinrichtung (16) über dem Bauteil (14);
und **gekennzeichnet durch** die Schritte:
Absenken des Befestigungselementes (12) auf das Bauteil (14), bis das Befestigungselement (12) auf das Bauteil (14) auftrifft, wobei das Absenken derart erfolgt, dass das Befestigungselement (12) mit geringem Impuls auf das Bauteil (14) auftrifft, wobei zumindest vor dem Auftreffen des Befestigungselementes (12) auf das Bauteil (14) das Befestigungselement (12) von der Halteeinrichtung (16) derart entkoppelt wird, dass eine Relativbeweglichkeit in einer Richtung parallel zu der Fügerichtung zwischen dem Befestigungselement (12) und der Halteeinrichtung (16) eingerichtet wird, so dass das Befestigungselement (12) mit verringertem Impuls auf das Bauteil (14) auftrifft.

2. Verfahren nach Anspruch 1, wobei die Halteeinrichtung (16) nach dem Auftreffen des Befestigungselementes (12) auf das Bauteil (14) abgebremst wird.

3. Verfahren nach einem der Ansprüche 1 bis 2, wobei das Fügeverfahren ein Bolzenschweißverfahren ist, bei dem zumindest eine Schweißzone (20) des Bauteils (14) geschmolzen wird, wobei das Befestigungselement (12) so weit auf das Bauteil (14) abgesenkt wird, dass das Befestigungselement (12) auf einen Boden (21) der geschmolzenen Schweißzone (20) auftrifft.

4. Verfahren nach Anspruch 3, wobei die Halteeinrichtung (16) mittels eines Linearaktuators (50) positionsgesteuert auf eine solche Sollposition (S_{H}) abgesenkt wird, die unabhängig von der Tiefe der geschmolzenen Schweißzone (20) und unabhängig von einem Abbrand an dem Befestigungselement (12) ein Auftreffen eines ungeschmolzenen Abschnittes des Befestigungselementes (12) und auf einen ungeschmolzenen Abschnitt des Bauteils (14) gewährleistet.

5. Verfahren nach Anspruch 3 oder 4, wobei das Befestigungselement (12) im Wesentlichen mit konstanter Geschwindigkeit die Schweißzone (20) durchdringt.

6. Verfahren nach einem der Ansprüche 1 bis 5, wobei das Befestigungselement (12) mittels eines Ladestiftes (64) von hinten in die Halteeinrichtung (16) eingesetzt wird.

7. Verfahren nach Anspruch 6, wobei eine Relativbeweglichkeit zwischen dem Befestigungselement (12) und der Halteeinrichtung (16) eingerichtet wird, indem ein Ladestiftaktuator (66) teilweise oder vollständig deaktiviert wird.

8. Verfahren nach Anspruch 7, wobei der Ladestiftaktuator (66) nach dem Herstellen der Schweißverbindung wieder teilweise oder vollständig reaktiviert wird, so dass zwischen dem Befestigungselement (12) und der Halteeinrichtung (16) wieder jene Relativposition eingerichtet wird, die vor dem Auftreffen des Befestigungselementes (12) auf das Bauteil (14) bestand.

9. Verfahren nach Anspruch 3, wobei das Befestigungselement (12) nach dem Eintauchen in die Schweißzone (20) abgebremst wird.

10. Verfahren nach Anspruch 9, wobei ein Linearaktuator (50) zum Absenken der Halteeinrichtung (16) so angesteuert wird, dass die Halteeinrichtung (16) abgebremst wird.

11. Verfahren nach Anspruch 9 oder 10, wobei zum Abbremsen eine Gegenkraft aufgebaut wird.

12. Fügevorrichtung (10) zum Fügen eines Befestigungselementes (12) auf ein Bauteil (14), mit einer Halteinrichtung (16) zum Halten eines Befestigungselementes (12), einem Linearaktuator (50) zum linearen Bewegen der Halteeinrichtung (16) und
**gekennzeichnet durch** eine Steuereinrichtung (48), die dazu ausgelegt ist, ein Verfahren auszuführen, das die Schritte aufweist:
festes oder unbewegliches Halten des Befestigungselementes (12);
Positionieren der Halteeinrichtung (16) über dem Bauteil (14);
Absenken des Befestigungselementes (12) auf das Bauteil (14), bis das Befestigungselement (12) auf das Bauteil (14) auftrifft, wobei das Absenken auf eine solche Art und Weise stattfindet, dass das Befestigungselement (12) auf das Bauteil (14) mit geringem Impuls auftrifft;
zumindest vor dem Auftreffen des Befestigungselementes (12) auf das Bauteil (14) Entkoppeln des Befestigungselementes (12) von der Halteeinrichtung (16), derart, dass eine relative Beweglichkeit in einer Richtung parallel zu der Fügerichtung zwischen der Halteeinrichtung (16) und dem Befestigungselement (12) eingerichtet wird, so dass das Befestigungselement (12) mit verringertem Impuls auf das Bauteil (14) auftrifft.

## Revendications

1. Procédé de jonction d'un élément de fixation (12) à un composant (14), comprenant les étapes suivantes:
insérer l'élément de fixation (12) dans un dispositif de maintien (16), dans lequel l'élément de fixation (12) est maintenu de façon fixe ou immobile;
positionner le dispositif de maintien (16) au-dessus du composant (14);
**caractérisé par** l'étape suivante:
abaisser l'élément de fixation (12) sur le composant (14) jusqu'à ce que l'élément de fixation (12) heurte le composant (14), l'abaissement étant effectué de telle sorte que l'élément de fixation (12) heurte le composant (14) avec une faible quantité de mouvement, dans lequel au moins avant l'impact de l'élément de fixation (12) sur le composant (14), l'élément de fixation (12) est découplé du dispositif de maintien (16) de telle sorte qu'une mobilité relative dans une direction parallèle à la direction de jonction soit établie entre l'élément de fixation (12) et le dispositif de maintien (16), de telle sorte que l'élément de fixation (12) heurte le composant (14) avec une quantité de mouvement réduite.

2. Procédé selon la revendication 1, dans lequel le dispositif de maintien (16) est freiné après l'impact de l'élément de fixation (12) sur le composant (14).

3. Procédé selon une des revendication 1 à 2, dans lequel le procédé de jonction est un procédé de soudage de goujons dans lequel au moins une zone de soudage (20) du composant (14) est en fusion, l'élément de fixation (12) étant abaissé sur le composant (14) dans une mesure telle que l'élément de fixation (12) frappe un fond (21) de la zone de soudage en fusion (20).

4. Procédé selon la revendication 3, dans lequel le dispositif de maintien (16) est abaissé, en position commandée, au moyen d'un actionneur linéaire (50) à une position souhaitée (S_{H}) qui, indépendamment de la profondeur de la zone de soudage en fusion (20) et indépendamment d'un brûlage de l'élément de fixation (12), assure un impact d'une partie non en fusion de l'élément de fixation (12) sur une partie non en fusion du composant (14).

5. Procédé selon la revendication 3 ou 4, dans lequel l'élément de fixation (12) pénètre dans la zone de soudage (20) essentiellement à une vitesse constante.

6. Procédé selon l'une des revendications 1 à 5, dans lequel l'élément de fixation (12) est inséré dans le dispositif de maintien (16) à partir de l'arrière au moyen d'une broche de chargement (64).

7. Procédé selon la revendication 6, dans lequel une mobilité relative entre l'élément de fixation (12) et le dispositif de maintien (16) est établie de telle sorte qu'un actionneur de broche de chargement (66) soit partiellement ou complètement désactivé.

8. Procédé selon la revendication 7, dans lequel l'actionneur de broche de chargement (66) est réactivé à nouveau partiellement ou complètement après que la connexion soudée ait été réalisée, de telle sorte que, entre élément de fixation (12) et le dispositif de maintien (16), la position relative qui était présente avant l'impact de l'élément de fixation (12) sur le composant (14) soit à nouveau rétablie.

9. Procédé selon la revendication 3, dans lequel l'élément de fixation (12) est freiné après avoir été plongé dans la zone de soudage (20).

10. Procédé selon la revendication 9, dans lequel un actionneur linéaire (50) pour abaisser le dispositif de maintien (16) est activé de telle sorte que le dispositif de maintien (16) soit freiné.

11. Procédé selon la revendication 9 ou 10, dans lequel une contre-force est accumulée pour le freinage.

12. Dispositif de jonction (10) pour joindre un élément de fixation (12) à un composant (14) à l'aide d'un dispositif de maintien (16) pour maintenir l'élément de fixation (12), avec un actionneur linéaire (50) pour le déplacement linéaire du dispositif de maintien (16), et **caractérisé par** un dispositif de commande (48) adapté pour exécuter un procédé comprenant les étapes suivantes:
maintenir de façon fixe ou immobile l'élément de fixation (12);
positionner le dispositif de maintien (16) au-dessus du composant (14);
abaisser l'élément de fixation (12) sur le composant (14) jusqu'à ce que l'élément de fixation (12) heurte le composant (14), l'abaissement étant effectué de telle sorte que l'élément de fixation (12) heurte le composant (14) avec une faible quantité de mouvement, et au moins avant l'impact de l'élément de fixation (12) sur le composant (14),
découpler l'élément de fixation (12) du dispositif de maintien (16) de telle sorte qu'une mobilité relative dans une direction parallèle à la direction de jonction soit établie entre le dispositif de maintien (16) et l'élément de fixation (12), de telle sorte que l'élément de fixation (12) heurte le composant (14) avec une quantité de mouvement réduite.
